# FASCICULE DE BREVET EUROPEEN

(11) **EP 3 720 798 B1**
(45) Date de publication et mention de la délivrance du brevet: **02.04.2025**
(21) Numéro de dépôt: 18800234.9
(22) Date de dépôt: 04.07.2018
(51) Int. Cl.: B65H 75/36

(54) **DISPOSITIF D'ENROULEMENT D'UN TUBE SOUPLE**
VORRICHTUNG ZUM AUFWICKELN EINES SCHLAUCHES
DEVICE FOR WINDING A FLEXIBLE TUBE

(30) Priorité: 05.07.2017 FR 1770715
(43) Date de publication de la demande: 14.10.2020
(73) Titulaire: Kandin, Patrice, 13650 Meyrargues (FR)
(72) Inventeur: Kandin, Patrice, 13650 Meyrargues (FR)
(86) Numéro de dépôt international: PCT/FR2018/000189
(87) Numéro de publication internationale: WO 2019/008240

(56) Documents cités:
- DE-A1- 4 311 071
- JP-A- 2007 126 931
- US-A- 1 519 018
- US-A- 2 011 521
- US-A- 321 554
- US-A- 5 560 564
- US-A1- 2007 157 438
- US-B1- 7 841 571

## Description

La présente invention concerne un dispositif d'enroulement d'un tube souple. Par tube souple on entend, à titre d'exemple, tuyaux, cordages, fils électriques ou câbles.

Généralement, on rencontre de la difficulté à enrouler les tuyaux d'arrosage, les tuyaux d'aspirateur de piscine ou les câbles électriques car ils se tordent, se vrillent en tout sens et donc se détériorent rapidement. Il est très malaisé de faire un enroulement satisfaisant.

La présente invention a pour fonction de faciliter l'enroulement d'un tube souple.

On connaît dans des domaines techniques bien différents le document US 321,554 qui montre un moyen de connexion pour les chaînes et le document JP 2007 126931 A qui enseigne un moyen d'insertion d'un filin pour prévenir la chute d'un panneau. US 7,841,571 B1 montre un dispositif pour maintenir un câble à fibre optique.

Ce dernier document vise un dispositif comportant deux lames plaquées l'une contre l'autre et solidaires en pivotement selon leurs axes de symétrie axiale respectifs qui constituent un axe de pivotement, une de ces lames présentant sur son bord gauche une échancrure ouverte vers le haut qui est formée par un premier arc de cercle dont l'origine est un point de raccordement situé sur le bord droit de cette échancrure et sur l'axe longitudinal de cette lame, un diamètre du premier arc de cercle étant supporté par cet axe longitudinal, ce premier arc de cercle présentant un angle au centre au moins égal à 180°.

Il apparait que l'on ne peut pas introduire dans les dispositifs visés ci-dessus un élément d'un diamètre égal à celui de l'arc de cercle. Cet élément doit avoir une taille sensiblement inférieure , si bien qu'il est impossible de le maintenir en place ou bien de l'immobiliser.

La présente invention a ainsi pour objet un dispositif prévu pour maintenir un tube souple afin de pouvoir l'enrouler aisément.

Selon l'invention, un dispositif d'enroulement d'un tube souple comporte deux lames identiques plaquées tête-bêche l'une contre l'autre et solidaires en pivotement selon leurs axes de symétrie axiale respectifs qui constituent un axe de pivotement, ainsi défini que :
- une de ces lames présente sur son bord gauche une échancrure ouverte vers le haut qui est formée par un premier arc de cercle dont l'origine est un point de raccordement situé sur le bord droit de cette échancrure et sur l'axe longitudinal de cette lame,
- un diamètre du premier arc de cercle qui correspond au diamètre du tube souple est supporté par l'axe longitudinal, et
- le premier arc de cercle présente un angle au centre au moins égal à 180° ;
de plus, lorsque ce dispositif est ouvert, c'est-à-dire lorsque les lames sont écartées, ledit tube souple peut être introduit dans l'une des échancrures.

Ainsi, on forme une première boucle sur le tuyau présentant donc deux brins. On ouvre le dispositif de manière à introduire les deux brins dans les échancrures correspondantes. Finalement, on referme le dispositif pour emprisonner les deux brins qui sont de la sorte immobilisés. Il suffit alors de faire tourner la boucle pour procéder à l'enroulement du tuyau.

Avantageusement, l'échancrure déborde vers le haut à partir du point de raccordement d'un second arc de cercle de même diamètre que celui du premier arc de cercle et tangent à ce premier arc de cercle en ce point de raccordement, le centre du deuxième arc de cercle figurant à droite du point de raccordement sur l'axe longitudinal.

En procédant de cette manière, on permet que le cercle formé par les deux lames ne soit en aucun cas obstrué lorsque l'on manœuvre le dispositif.

De préférence, l'angle au centre du premier arc de cercle est compris entre 180° et 230°.

Il est en effet préférable que cet angle au centre dépasse 180° pour pincer légèrement le tuyau lors de son introduction dans le dispositif.

A titre d'exemple, l'angle au centre vaut 225°.

Suivant un mode de réalisation privilégié, une entretoise est disposée sur l'axe de pivotement entre les deux lames.

Pour plus de commodité, des moyens de maintien sont prévus qui sont fixés à l'axe de pivotement.

Finalement, on peut prévoir une butée sur l'une de ces lames, butée qui est perpendiculaire à cette lame.

La présente invention apparaîtra maintenant avec plus de détails dans le cadre de la description qui suit d'un exemple de réalisation donné à titre illustratif en se référant aux figures annexées qui représentent :
- la figure 1, un schéma d'une lame selon l'invention,
- la figure 2, un schéma du dispositif ouvert, et
- la figure 3, un schéma du dispositif refermé.

Les éléments présents dans plusieurs figures sont affectés d'une seule et même référence.

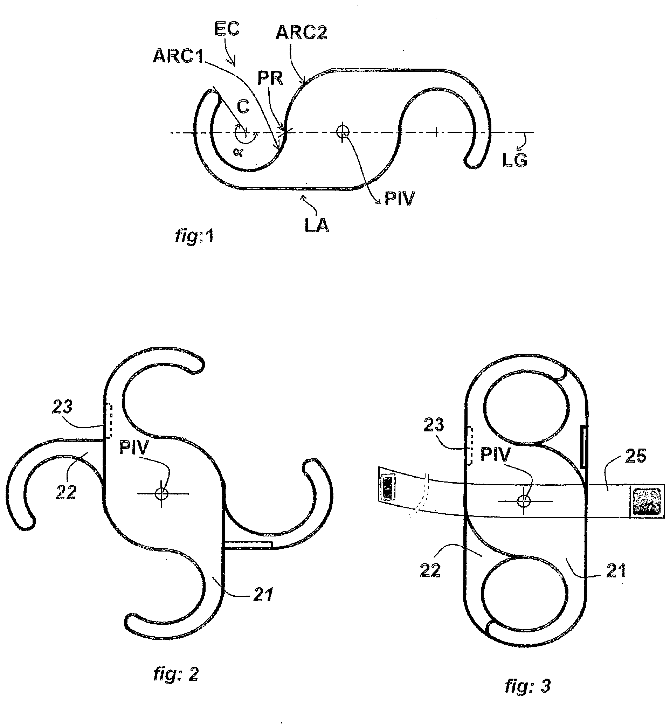

En référence à la figure 1, une lame LA se présente comme une plaque allongée en forme de rectangle dont les petits côtés sont arrondis, cette plaque présentant un axe longitudinal LG. Elle est pourvue d'une symétrie axiale par rapport à son centre PIV qui forme un axe de pivotement.

La lame LA présente sur son bord gauche une échancrure EC ouverte vers le haut. On définit un point de raccordement PR comme le point d'intersection du bord droit de l'échancrure EC et de l'axe longitudinal LG.

Cette échancrure prend la forme d'un premier arc de cercle ARC1 qui prend son origine au point de raccordement PR et qui se développe dans le sens des aiguilles d'une montre étant entendu que le centre C de cet arc de cercle ARC1 se trouve à gauche du point de raccordement PR sur l'axe longitudinal LG.

Le premier arc de cercle ARC1 présente un angle au centre noté α. Cet angle au centre α est au moins égal à 180°. Dans la pratique, il dépasse cette valeur pour aller jusqu'à 230°. Typiquement, il vaut de l'ordre de 225°.

L'échancrure EC se prolonge vers le haut de préférence par un second arc de cercle ARC2 prenant son origine au point de raccordement PR.

Ce second arc de cercle ARC2 voit son centre figurer à droite du point de raccordement PR sur l'axe longitudinal LG. Il a le même diamètre que le premier arc de cercle ARC1 et s'étend dans le sens des aiguilles d'une montre depuis son origine PR. Il se termine lorsqu'il rencontre le bord supérieur de la lame LA.

En fait, cette forme particulière de l'échancrure permet d'éviter une obstruction du premier arc de cercle ARC1, comme cela apparaîtra par la suite.

L'échancrure EC peut prendre une forme différente à droite du point de raccordement pourvu qu'elle déborde du second arc de cercle ARC2.

On remarque que les deux arcs de cercle ARC1, ARC2 sont tangents au point de raccordement PR selon une droite qui est verticale sur la figure.

La lame LA présente une symétrie axiale selon l'axe de pivotement PIV. Elle présente donc une autre échancrure inversée sur le bord droit de la lame LA. Cette autre échancrure ne sera pas plus décrite puisqu'elle résulte d'une symétrie.

En référence à la figure 2, deux lames, la lame supérieure 21 et la lame inférieure 22 sont assemblées tête-bêche selon leur axe de pivotement PIV qui est commun. Le moyen d'assemblage (non représenté) peut être un boulon, un axe maté, un rivet ou tout autre moyen analogue connu de l'homme du métier.

On distingue sur la première lame 21 une butée 23 qui fait saillie vers l'arrière et qui est donc perpendiculaire à la lame. Cette butée a une double fonction :
- elle facilite la prise en main du dispositif, et
- elle limite la rotation des deux lames 21, 22 l'une par rapport à l'autre.

On peut éventuellement prévoir une entretoise (non représentée) entre les deux lames 21, 22 le long de l'axe de pivotement PIV.

Le dispositif est ici représenté ouvert, si bien que l'on peut introduire un tube souple dans l'une des échancrures pourvu qu'il ait le même diamètre que les arcs de cercle.

De plus, on peut former une boucle présentant donc deux brins pour introduire le premier brin dans l'échancrure supérieure de la lame supérieure 21 et le second brin dans l'échancrure inférieure de cette même lame.

En référence à la figure 3, le dispositif est représenté refermé. On distingue bien les deux cercles formés par les deux lames lorsque leurs axes longitudinaux sont alignés.

Ces deux cercles permettent d'emprisonner chacun un brin de la boucle. Ils ne doivent pas être obstrués lors de la fermeture du dispositif, d'où la forme de l'échancrure qui déborde du second arc de cercle ARC2.

On distingue de plus des moyens de maintien 25 destinés à emprisonner le tube souple lorsqu'il est complètement enroulé. Il peut s'agir d'un lacet ou d'un ruban muni d'une bande auto-agripante. Idéalement, il est fixé sur l'axe de pivotement PIV.

L'exemple de réalisation de l'invention présenté ci-dessus a été choisi eu égard à son caractère concret. Il ne serait cependant pas possible de répertorier de manière exhaustive tous les modes de réalisation que recouvre cette invention, qui est définié dans les revendications.

## Revendications

1. Dispositif d'enroulement d'un tube souple comportant deux lames identiques (LA, 21, 22) plaquées tête-bêche l'une contre l'autre et solidaires en pivotement selon leurs axes de symétrie axiale respectifs qui constituent un axe de pivotement (PIV), ainsi défini que :
- une desdites lames (LA) présente sur son bord gauche une échancrure (EC) ouverte vers le haut qui est formée par un premier arc de cercle (ARC1) dont l'origine est un point de raccordement (PR) situé sur le bord droit de cette échancrure et sur l'axe longitudinal (LG) de ladite lame,
- un diamètre dudit premier arc de cercle qui correspond au diamètre dudit tube souple est supporté par ledit axe longitudinal, et
- ledit premier arc de cercle présente un angle au centre (α) au moins égal à 180° ;
**caractérisé en ce que**, lorsqu'il est ouvert, c'est-à-dire lorsque ces lames (LA, 21, 22) sont écartées, ledit tube souple peut être Introduit dans l'une des échancrures (EC).

2. Dispositif selon la revendication 1, **caractérisé en ce que** ladite échancrure déborde vers le haut à partir dudit point de raccordement (PR) d'un second arc de cercle (ARC2) de même diamètre que celui dudit premier arc de cercle (ARC1) et tangent à ce premier arc de cercle en ce point de raccordement, le centre du deuxième arc de cercle figurant à droite dudit point de raccordement sur ledit axe longitudinal (LG).

3. Dispositif selon l'une quelconque des revendications 1 ou 2, **caractérisé en ce que** l'angle au centre (α) dudit premier arc de cercle (ARC1) est compris entre 180° et 230°.

4. Dispositif selon la revendication 3, **caractérisé en ce que** ledit angle au centre (α) vaut 225°.

5. Dispositif selon l'une quelconque des revendications précédentes, **caractérisé en ce que** une entretoise est disposée sur ledit axe de pivotement (PIV) entre les deux lames (21, 22).

6. Dispositif selon l'une quelconque des revendications précédentes, **caractérisé en ce que** des moyens de maintien (25) sont prévus qui sont fixés audit axe de pivotement (PIV).

7. Dispositif selon l'une quelconque des revendications précédentes, **caractérisé en ce qu'**une butée (23) est prévue sur l'une desdites lames (LA, 21, 22), butée qui est perpendiculaire à cette lame.

## Patentansprüche

1. Vorrichtung zum Aufwickeln eines flexiblen Schlauches, umfassend zwei identische Lamellen (LA, 21, 22), die kopfüber angeordnet und drehbar miteinander verbunden sind entlang ihrer jeweiligen axialen Symmetrieachsen, welche eine Drehachse (PIV) definieren, festgelegt wie folgt :
• eine der genannten Lamellen (LA) an ihrer linken Kante eine nach oben offene Aussparung (EC) aufweist, die durch einen ersten Kreisbogen (ARC1) gebildet wird, dessen Ursprung ein Verbindungs- oder Anschlusspunkt (PR) ist, der sich an der rechten Kante dieser Aussparung und auf der Längsachse (LG) der genannten Lamelle befindet,
• ein Durchmesser des genannten ersten Kreisbogens, der dem Durchmesser des genannten flexiblen Schlauches entspricht, von der genannten Längsachse getragen wird, und
• der genannte erste Kreisbogen einen Mittelpunktswinkel (α) von mindestens 180° aufweist;
**dadurch gekennzeichnet, dass**, wenn die Vorrichtung geöffnet ist, d. h., wenn die Lamellen (LA, 21, 22) voneinander auseinandergezogen sind, der genannte flexible Schlauch in eine der genannten Aussparungen (EC) eingeführt werden kann.

2. Vorrichtung nach Anspruch 1, **dadurch gekennzeichnet, dass** die genannte Aussparung von dem genannten Verbindungs- oder Anschlusspunkt (PR) nach oben durch einen zweiten Kreisbogen (ARC2) erweitert wird, der denselben Durchmesser wie der genannte erste Kreisbogen (ARC1) aufweist und an diesem ersten Kreisbogen in diesem Verbindungs- oder Anschlusspunkt tangential ist, wobei der Mittelpunkt des zweiten Kreisbogens rechts von dem genannten Verbindungs- oder Anschlusspunkt auf der genannten Längsachse (LG) liegt.

3. Vorrichtung nach einem der Ansprüche 1 oder 2, **dadurch gekennzeichnet, dass** der Mittelpunktswinkel (α) des genannten ersten Kreisbogens (ARC1) zwischen 180° und 230° liegt.

4. Vorrichtung nach Anspruch 3, **dadurch gekennzeichnet, dass** der genannte Mittelpunktswinkel (α) 225° beträgt.

5. Vorrichtung nach einem der vorhergehenden Ansprüche, **dadurch gekennzeichnet, dass** ein Distanzstück auf der genannten Drehachse (PIV) zwischen den beiden Lamellen (21, 22) angeordnet ist.

6. Vorrichtung nach einem der vorhergehenden Ansprüche, **dadurch gekennzeichnet, dass** Haltemittel (25) vorgesehen sind, die an der genannten Drehachse (PIV) befestigt sind.

7. Vorrichtung nach einem der vorhergehenden Ansprüche, **dadurch gekennzeichnet, dass** ein Anschlag (23) an einer der genannten Lamellen (LA, 21, 22) vorgesehen ist, wobei der Anschlag senkrecht zu dieser Lamelle steht.

## Claims

1. Device for winding a flexible tube, comprising two identical blades (LA, 21, 22) placed head-to-tail against each other and pivotally connected along their respective axial symmetry axes, which define a pivot axis (PIV), Here below defined:
- one of said blades (LA) has, on its left edge, a notch (EC) open upwards, formed by a first circular arc (ARC1) whose origin is a connection point (PR) located on the right edge of this notch and on the longitudinal axis (LG) of said blade,
- a diameter of said first circular arc, corresponding to the diameter of said flexible tube, is supported by said longitudinal axis, and
- said first circular arc has a central angle (α) of at least 180°;
**characterized in that**, when open, i.e., when the blades (LA, 21, 22) are spread, said flexible tube can be inserted into one of the notches (EC).

2. Device according to claim 1, **characterized in that** said notch extends upwards from said connection point (PR) by a second circular arc (ARC2) having the same diameter as said first circular arc (ARC1) and tangent to said first circular arc at said connection point, the center of the second circular arc being located to the right of said connection point on said longitudinal axis (LG).

3. Device according to any one of claims 1 or 2, **characterized in that** the central angle (α) of said first circular arc (ARC1) is between 180° and 230°.

4. Device according to claim 3, **characterized in that** said central angle (α) is 225°.

5. Device according to any one of the preceding claims, **characterized in that** a spacer is disposed on said pivot axis (PIV) between the two blades (21, 22).

6. Device according to any one of the preceding claims, **characterized in that** retaining means (25) are provided, which are fixed to said pivot axis (PIV).

7. Device according to any one of the preceding claims, **characterized in that** a stop (23) is provided on one of said blades (LA, 21, 22), said stop being perpendicular to this blade.
